# EUROPÄISCHE PATENTSCHRIFT

(11) **EP 0 976 982 B1**
(45) Veröffentlichungstag und Bekanntmachung des Hinweises auf die Patenterteilung: **03.12.2003**
(21) Anmeldenummer: 98810723.1
(22) Anmeldetag: 27.07.1998
(51) Int. Cl.: F23R 3/04, F23R 3/34, F02C 7/228, F02C 9/28

(54) **Verfahren zum Betrieb einer Gasturbinenbrennkammer mit gasförmigem Brennstoff**
Method of operating the combustion chamber of a liquid-fuel gas turbine
Procédé de fonctionnement d'une chambre de combustion de turbine à gaz à carburant liquide

(43) Veröffentlichungstag der Anmeldung: 02.02.2000
(73) Patentinhaber: ALSTOM (Switzerland) Ltd, 5401 Baden (CH)
(72) Erfinder: Müller, Gerhard, 82110 Germering (DE); Reiss, Frank, 79787 Lauchringen (DE); Schiessel, Pirmin, 5424 Unterehrendingen (CH); Tschirren, Stefan, 4208 Nunningen (CH)

(56) Entgegenhaltungen:
- EP-A- 0 802 310
- US-A- 4 100 733
- US-A- 5 303 542
- US-A- 5 402 634

## Beschreibung

### TECHNISCHES GEBIET

Die vorliegende Erfindung bezieht sich auf das Gebiet der Gasturbinen. Sie betrifft ein Verfahren zum Betrieb einer Gasturbine gemäss dem Oberbegriff des Anspruches 1.

### STAND DER TECHNIK

Gasturbinen werden zunehmend mit Mehrfachbrennem mit magerer Vormischtechnik ausgerüstet. Dabei werden der Brennstoff und die Verbrennungsluft möglichst gleichmässig vorgemischt und erst dann der Flamme zugeführt. Wird dies mit einem hohen Luftüberschuss vollzogen, so entstehen relativ niedrige Flammentemperaturen und damit eine geringe Bildung von Stickoxiden.

Entsprechend der Geometrie von Gasturbinen wird die Mehrzahl von Brennern häufig ringförmig in Form von Ringbrennkammern angeordnet. Solche Gasturbinen-Ringbrennkammern sind beispielsweise - aus EP-0 597 137 B1 und aus EP-0 597 138 B1 bekannt. Die flüssigen oder gasförmigen Brennstoffe werden dabei den in mehrfachen Ringen angeordneten Brennern über Brennstoffzufuhrringe zugeführt, wo sie in die Ringbrennkammer eingedüst und verbrannt werden. Ebenso wird die Wasserzufuhr zu den Brennern über Wasserringe gewährleistet, die neben den Brennstoffzufuhrringen angeordnet sind.

Bei Verwendung von gasförmigem Brennstoff können je nach Art des Belastungszustandes, der Anzahl in Betrieb befindlicher Brenner, der Emissionswerte oder ähnlicher Kenngrössen der Gasturbine unterschiedliche Betriebsarten der individuellen Brenner mehr oder weniger vorteilhaft sein. Bei Doppelkegelbrennern kann beispielsweise im sogenannten Pilotmodus der gasförmige Brennstoff in der Mitte an der Basis des Doppelkegelbrenners durch die sogenannte Pilotgasbelochung der Verbrennungsluft beigemischt werden. Die so gefahrenen Brenner zeichnen sich durch eine sehr stabile Flamme mit hoher Flammentemperatur aus, was auf der anderen Seite aber auch unvorteilhafte Emissionswerte nach sich zieht. Im sogenannten Vormischmodus andererseits wird bei Doppelkegelbrennem der gasförmige Brennstoff in der Kegelregion durch die Vormischgasbelochung seitlich der Verbrennungsluft beigemischt. Die Flammen von Brennern im Vormischmodus zeichnen sich durch eine niedrige Flammentemperatur und die damit verbundenen vorteilhaften Emissionswerte aus, sind aber wesentlich weniger stabil als im Pilotmodus betriebene Brenner. Ein Doppelkegelbrenner kann grundsätzlich derart gebaut sein, dass beide obigen Betriebsarten gefahren werden können, nacheinander sowie parallel, je nachdem wird der gasförmige Brennstoff durch die eine oder die andere Belochung eingedüst.

Wird eine Gasturbine der eingangs genannten Art vom Leerlaufbetrieb in den Lastbetrieb hochgefahren, so treten häufig unerwünschte Effekte auf. Unter anderem sind in gewissen Phasen des Hochfahrens und bei Teillastbetrieb starke Rauch- und Stickoxidentwicklung möglich, Brenner können auslöschen, ausserdem kann unvorteilhaftes Pulsieren der Gasturbine auftreten.

Aus den Dokumenten US-A-5 303 542 oder EP-A2-0 802 310 sind Brennstoffsysteme für Gasturbinen bekannt, in denen der Brennkammer Brennstoff durch ringförmig angeordnete Pilot- und Hauptbrenner zugeführt wird. Durch ein System von Ventilen kann die Brennstoff Eindüsung gestuft erfolgen, wobei die Ansteuerung der Pilot- und der Hauptbrenner getrennt voneinander geschieht.

### DARSTELLUNG DER ERFINDUNG

Der Erfindung liegt demnach die Aufgabe zugrunde, ein Verfahren anzugeben, mit welchem sowohl ein Hochfahren als auch ein Teillastbetrieb einer mit einem gasförmigen Brennstoff betriebenen Gasturbine auf sichere, unkomplizierte und schadstoffarme Weise möglich ist.

Die Aufgabe wird bei einem Verfahren gemäss dem Oberbegriff dadurch gelöst, dass wenigstens eine der Gruppen die selben Brenner wie eine andere Gruppe umfasst, wobei sich die beiden Gruppen nur in der Betriebsart der Brenner unterscheiden, und die Brenner der beiden Gruppen in einem mittleren Lastbereich in zwei Betriebsarten betrieben werden.

Eine Einteilung in Vormischmodus und Pilotmodus erlaubt eine äusserst geeignete Einstellung des Brennverhaltens in der Ringbrennkammer, welche den Kompromiss zwischen Verhinderung von Rauch- und Stickoxidbildung und stabiler und vor Auslöschung sicherer Flammen optimal regulieren lässt.

Wird die Gasturbine vom Leerlauf in den Last- oder Teillastbetrieb hochgefahren, so werden die Gruppen vorzugsweise nacheinander in verschiedenen Phasen des Hochfahrens zugeschaltet. Die Grenzen zwischen den verschiedenen Phasen werden dabei wiederum bevorzugt in Abhängigkeit von der Drehzahl der Gasturbine, von der an der Gasturbine anliegenden Last und/oder in Abhängigkeit von den von der Gasturbine abgegebenen Emissionen bestimmt. Zudem kann ebenfalls in Abhängigkeit von den oben genannten Kenngrössen die Zufuhr an gasförmigen Brennstoff variabel gestaltet werden. Auf diese Weise kann je nach Rahmenbedingung ein optimales Brennverhalten der Ringbrennkammer auf einfache Art eingestellt werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine schematische Darstellung von Brennstoffsystem und Brenner;
- Fig. 2: eine schematische Darstellung der Ringbrennkammer in Ansicht gegen die Gasflussrichtung;
- Fig. 3: eine Darstellung der relativen Brennstoffverteilung auf die drei Brennerringe in Prozenten (Ordinate) als Funktion der an der Gasturbine angelegten Last (Abszisse) in Prozenten relativ zur Vollast, und
- Fig. 4: eine Darstellung des Brennstoff-Luft Verhältnisses-φ-(Ordinate) als Funktion von der relativ zur Vollast bemessenen, an der Gasturbine anliegenden Last (Abszisse).

### WEGE ZUR AUSFÜHRUNG DER ERFINDUNG

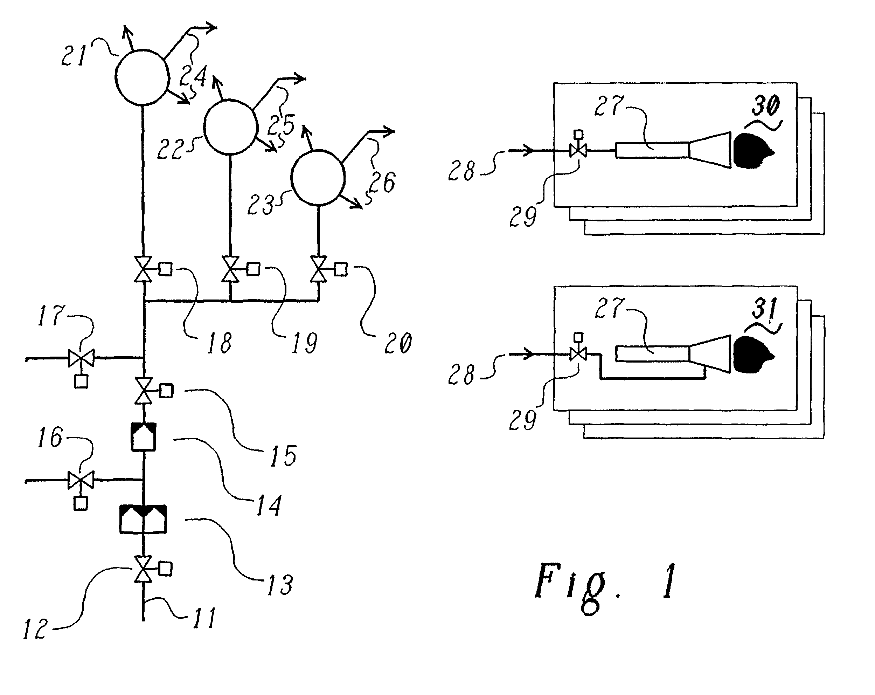

Figur 1 gibt eine schematische Darstellung von einer erfindungsgemässen Ansteuerung einer Ringbrennkammer. Der gasförmige Brennstoff wird über die Zubringerleitung 11 dem Brennersystem zugeführt, wobei die Zufuhr von einem Hauptabschaltventil 12 geregelt werden kann. Der Brennstoff wird zunächst in einem Filter 13 und dann mit einem Sieb 14 gereinigt, und tritt dann über ein Schnellabschaltventil 15 regelbar in die brennernahen Regionen. zwischen dem Filter 13 und dem Sieb 14 bzw. hinter dem Schnellabschaltventil 15 zweigen Leitungen ab, die mit Entlastungsventilen 16, 17 ausgestaltet sind. Der Einteilung der Brennergruppen 40-42 entsprechend teilt sich anschliessend die Brennerleitung auf Brennstoffzufuhrringe 21-23 auf, welche über Steuerventile 18-20 individuell ansteuerbar sind. Die Brennstoffzufuhrringe 21-23 weisen Brennstoffzufuhrringauslässe 24-26 auf, über welche die Brenner 27 der jeweiligen Gruppe 40-42 mit dem gasförmigen Brennstoff versorgt werden. Je nach Betriebsart 30,31 der Brenner 27 der betrachteten Gruppe 40-42 werden die Brenner 27 unterschiedlich angesteuert. Wird ein Brenner 27 im Pilotmodus 30 betrieben, so strömt der Brennstoff zunächst durch ein Brennerventil 29 und wird dann unmittelbar am Fuss des Kegelbrenners 27 durch die Pilotgasbelochung mittig eingedüst. Wird andererseits ein Brenner 27 im Vormischmodus 31 betrieben, so wird der gasförmige Brennstoff nach dem Brennerventil 29 in der Kegelregion durch die Vormischgasbelochung in den Verbrennungsluftstrom eingedüst.

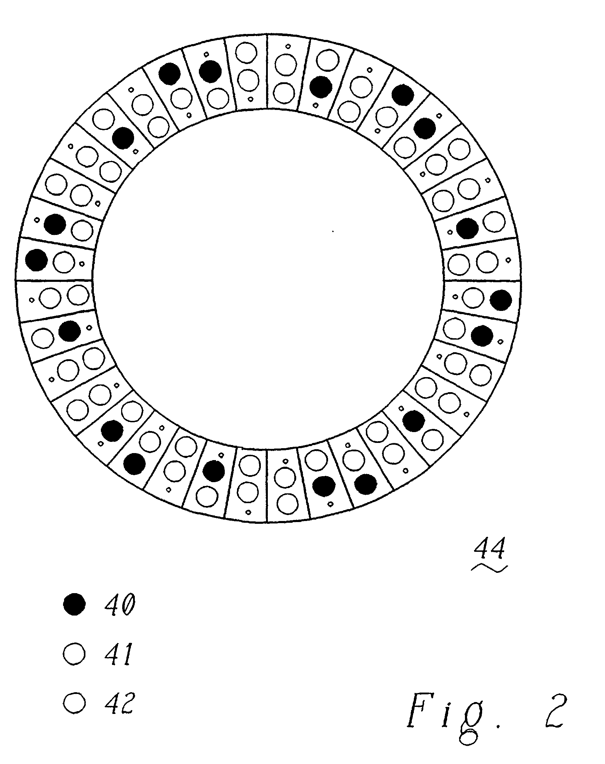

Figur 2 zeigt einen Schnitt durch die Ringbrennkammer mit der Einteilung der Brennergruppen 40-42 entgegen der Gasflussrichtung. Die drei Gruppen 40-42 der 72 Brenner sind durch entsprechende Markierung gekennzeichnet. Gefüllte Kreise bezeichnen die 18 Brenner 27 der ¼ Vormischbrennergruppe 40, leere Kreise bezeichnen die 54 Brenner, die wenn im Vormischmodus 31 betrieben die ¾ Vormischbrennergruppe 41 ausmachen, und wenn im Pilotmodus 30 betrieben die ¾ intern pilotierte Brennergruppe 42 bilden. Mit anderen Worten werden die beiden Gruppen 41 und 42 von den gleichen Brennern gebildet, und die beiden Gruppen unterscheiden sich nur in der Art der Ansteuerung der Brenner 27, wie dies in Figur 1 dargestellt ist.

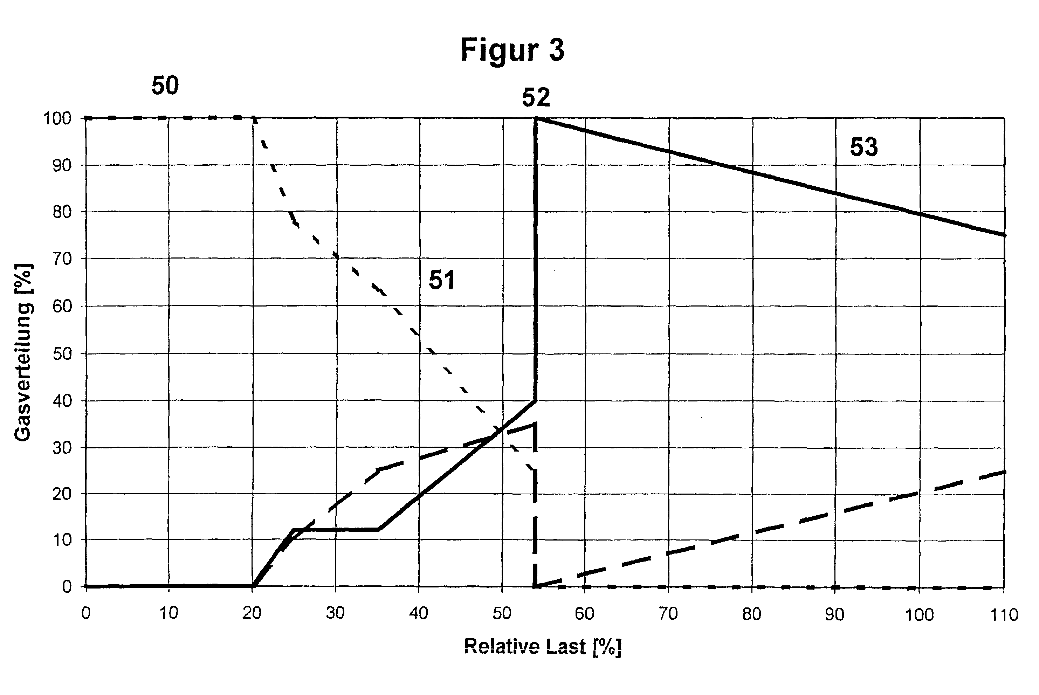

Figur 3 zeigt die Gasverteilung in % auf die jeweiligen Brennergruppen als Funktion der an der Gasturbine anliegenden Last in Prozenten relativ zur Vollast beim Hochfahren vom Leerlaufbetrieb in den Vollast (100%) oder sogar in den Überlastbetrieb (>100%).

Das Hochfahren der Gasturbine vom Stillstand in den Leerlaufbetrieb ist bei Verwendung von gasförmigem Brennstoff einfach. Die Gasturbine wird dabei auf ca. 600 rpm extern beschleunigt, bei dieser Drehzahl wird dann der Brennstoff in Abhängigkeit der Turbinenaustrittstemperatur eingedüst und dann gezündet. Dabei werden nur die 54 Brenner der ¾ intern pilotierten Brennergruppe 42 verwendet. Für die oben angegebene Gasturbine sind dabei typischerweise Gasflüsse von 600-700gr/s vorteilhaft.

In der ersten Phase 50 des Hochfahrens vom Leerlauf zum Volllastbetrieb der Gasturbine ist der Betrieb gleich wie beim Hochfahren in den Leerlauf, d.h. nur die 54 Brenner der ¾ intern pilotierten Brennergruppe 42 werden verwendet und einfach zunehmend mit gasförmigem Brennstoff versorgt. Damit wird die Stabilität der Flammen im niedrigen Lastbereich sichergestellt.

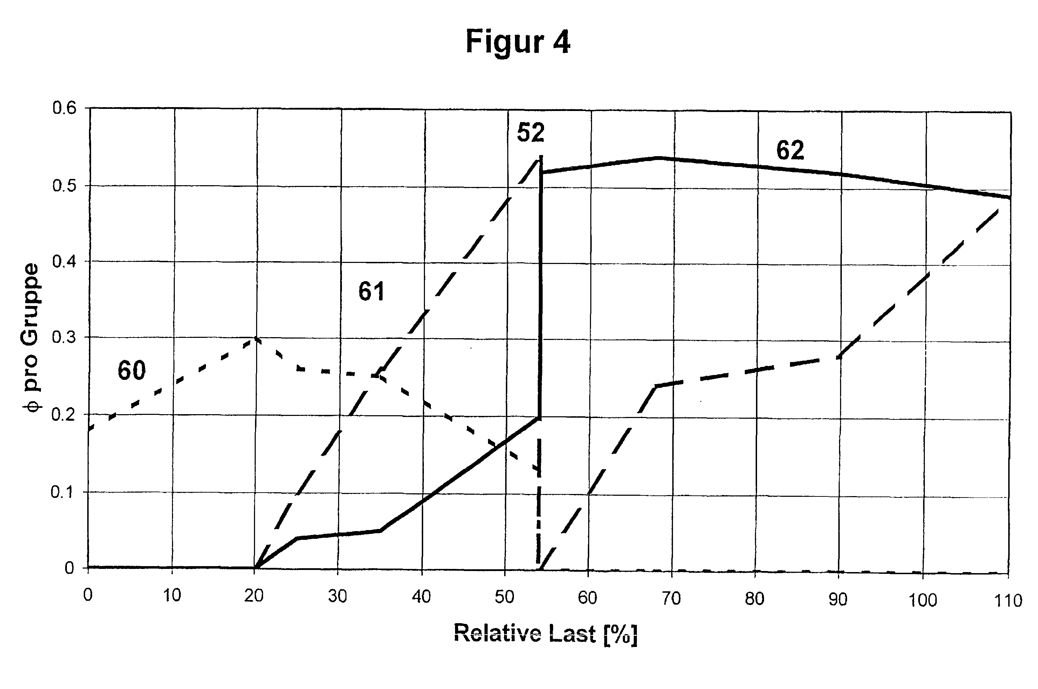

Bei ca. 20% Last werden nun die anderen zwei Gruppen 40 und 41 zugeschaltet. In der zweiten Phase 51 sind also alle drei Gruppen 40-42 aktiv, was bedeutet, dass die Brenner der Gruppen 41 und 42 parallel in beiden Betriebsmodi laufen. Die Gaseinspeisung der drei Gruppen ist in der zweiten Phase 51 unterschiedlich. Die ¾ intern pilotierte Gruppe 42 wird kontinuierlich mit weniger gasförmigem Brennstoff angesteuert, und beim Umschaltpunkt 52, d.h. vorzugsweise bei ca. 50% Last werden nur noch ca. 25% des gesamtem Gasflusses der ¾ intern pilotierten Gruppe 42 zugeführt. Andererseits werden die Vormischbrennergruppen 40 und 41 entsprechend mit zunehmender Gasmenge angesteuert. Die ¾ Vormischbrennergruppe 41 endet beim Umschaltpunkt 52 mit einer relativen Gasmenge von ca. 40%, d.h. die Brennstoffzufuhr der Brenner der Gruppen 41 und 42 verschiebt sich immer mehr von der intern pilotierten Betriebsweise zur Vormischansteuerung. In der zweiten Phase 51 wird zusätzlich auch die ¼ Vormischbrennergruppe 40 hochgefahren und zwar wesentlich intensiver als die ¾ Vormischbrennergruppe 41. Beim Umschaltpunkt 52 nämlich werden ca. 36% der Brennstoffmenge den nur 18 Brennern der ¼ Vormischbrennergruppe 40 zugesteuert, d.h. diese Brennergruppe wird sehr fett gefahren. Dies ist insbesondere auch aus Figur 4 ersichtlich, wo das Brennstoff zu Luft-Verhältnis φ als Funktion der an der Gasturbine anliegenden Last aufgetragen ist. In der ersten Phase 60 sind die Brenner der ¾ intern pilotierten Brennergruppe 42 ziemlich mager aber zunehmend angesteuert (φ steigt von ca. 0.18 auf 0.3), in der zweiten Phase 61 nimmt die Gemischdichte bis zum Umschaltpunkt 52 hingegen wieder auf ca. 0.13 ab. In der zweiten Phase 61 werden die Vormischbrennergruppen zugeschaltet, aber in sehr unterschiedlichem Masse mit Brennstoff versorgt. Die ¾ Vormischbrennergruppe 41 wird in diesem Bereich relativ mager auf einen Wert von ca. φ=0.2 beim Umschaltpunkt 52 heraufgefahren, wohingegen die 18 Brenner der ¼ Vormischbrennergruppe 40 relativ fett auf ca. φ=0.55 beim Umschaltpunkt 52 gefahren werden (Beim obengenannten speziellen Brenner werden dabei ca. 2.2kg/s Brennstoffgas in die Brenner der ¼ Vormischbrennergruppe 40 eingespiesen). Diese Mischung von intern pilotierten Brennern (Gruppe 42), und extern pilotierten Brennern der Gruppe 40 (Gruppe 40 wird gewissermassen durch die Brenner der Gruppe 41 extern pilotiert) ist die Basis für optimierte Stickoxid-Emissionen in diesem Lastbereich von ca. 20-50% ohne die Nachteile des Auslöschens.

Beim Umschaltpunkt 52, werden die Gasflüsse unter Verwendung einer bestimmten Logikschaltung in grossem Masse umgelegt. Die ¾ intern pilotierte Brennergruppe 42 und die ¼ Vormischbrennergruppe 40 werden vollständig ausgeschaltet, während die ¾ Vormischbrennergruppe 41 auf fetten Betrieb hochgesteuert wird. Beim Hochfahren werden bei vorzugsweise ca. 53.5% relativer Last alle Ventile gleichzeitig geschaltet. Da der Brennstoffgasdruck in den Leitungen zur ¾ intern pilotierten Brennergruppe 42 derart hoch ist, strömt auch unmittelbar nach dem Schliessen der Ventile noch so viel Brennstoff intern in die Brenner, dass die Gefahr des Auslöschens bei diesem an sich abrupten Schaltungsprozess sehr gering ist. Beim Herunterfahren hingegen muss anders vorgegangen werden, um ein Auslöschen effektiv zu verhindern: bei ca. 53% relativer Last wird die Brennstoffversorgung der ¾ Vormischbrennergruppe 41 erst zurückgenommen, wenn der Gasfluss in den Leitungen zur ¾ intern pilotierten Brennergruppe 42 einen genügenden Wert erreicht hat (beim oben angegebenen Brenner sind dies ca. 0.72kg/s). Die ¼ Vormischbrennergruppe 40 wird beim Herunterfahren dann mit Brennstoff versorgt, wenn der Gasfluss der ¾ intern pilotierten Brennergruppe bereits einen bestimmten Wert angenommen hat (im obigen Beispiel mehr als 0.12kg/s für 0.05s).

In der dritten Phase 53,62 oberhalb des Umschaltpunktes 52, laufen alle Brenner im Vormischmodus 31. Nur die Gruppen 40 und 41 sind aktiv. Bei zunehmender Last wird oberhalb des Umschaltpunktes die ¼ Vormischbrennergruppe 40 immer mehr mit gasförmigem Brennstoff versorgt, während die ¾ Vormischbrennergruppe 41 eher etwas runtergefahren wird. Generell wird bei mittlerer Last oberhalb des Umschaltpunktes 52 aber die ¾ Vormischbrennergruppe 41 fett gefahren und die ¼ Vormischbrennergruppe 40 eher mager (Siehe Figur 4). Im Vollast und insbesondere im Überlastbereich (>100%) sind die Gemischdichten dann aber sehr ähnlich und Werte von φ von ca. 0.5 gelten für beide Gruppen 40 und 41. Im Bereich zwischen dem Umschaltpunkt 52 und der Vollast (100%) ist das Brennstoff zu Luft Verhältnis φ der wichtigste Parameter, der für die Stickoxidemissionen relevant ist. Um den Stickoxid-Ausstoss der Gasturbine aber weiterhin zu optimieren, ist es vorteilhaft neben der Variation des Wertes von φ auch das Verhältnis zwischen den 54 Brennern der ¾ Vormischbrennergruppe 41 (hier die Hauptvormischbrennergruppe) und der ¼ Vormischbrennergruppe 40 (hier die extern pilotierte Vormischbrennergruppe) zu variieren. Auf diese Weise ist es möglich, eine feine Einstellung der Stickoxidemissionen und der Flammenstabilität zu erreichen, insbesondere kann auf Änderungen in der Gasturbinenhardware, auf die Umgebungsbedingungen oder auf schnelle Änderungen der an der Gasturbine anliegenden Last reagiert werden.

Läuft die Gasturbine auf Vollast (100%), so kann die Stickoxidemission mit anderen Worten über das Brennstoffansteuerungsverhältnis der beiden Gruppen 40 und 41 optimal eingestellt werden. Für einen homogenen Betrieb sind insbesondere Verhältnisse ¼ (Gruppe 40) zu ¾ (Gruppe 41) von 0.1 bis 0.25 optimal.

In der Praxis besonders wichtig für den Betrieb einer Gasturbine ist das Verhalten bei schnellen Lastschwankungen. Gerade bei grossen Lastgradienten besteht insbesondere die Gefahr, dass die Brenner auslöschen. Im Lastbereich unterhalb des Umschaltpunktes 52 wird diese Gefahr dadurch vermindert, dass zumindest Teile der Brenner (Gruppe 42) im stabilen, intern pilotierten Betriebsmodus gefahren werden. Oberhalb des Umschaltpunktes 52 kann auf schnelle Lastschwankungen so reagiert werden, dass die ¾ Vormischbrennergruppe 41 fetter gefahren wird und mit viel Brennstoff versorgt wird, während die ¼ Vormischbrennergruppe 40 zu magerem Betrieb runtergefahren wird. Dies führt zu stabilen Flammen welche nicht auslöschen. Es ist somit klar, dass insbesondere im Lastbereich wesentlich oberhalb vom Umschaltpunkt diese Anpassung immer besser eingesetzt werden kann weil dort die ¼ Vormischbrennergruppe 40 wesentlich mit Brennstoff versorgt wird. Um auch im Bereich knapp oberhalb des Umschaltpunktes 52 auf schnelle Schwankungen der an der Gasturbine anliegenden Last zu reagieren, kann mit die in die Brenner einströmende Luft über das VIGV (variable inlet guide vane) etwas heruntergeregelt werden, was ebenfalls zu einem fetteren Brennstoff zu Luft Verhältnis und damit zu stabileren Brennerflammen führt.

Diese komplizierte Führung des Hochfahrens ist zusammenfassend aus folgenden Gründen vorteilhaft:
- In allen Lastbereichen können die Brenner der Gasturbine stabil und vor Auslöschen sicher eingestellt werden.
- Durch die in allen Lastbereichen mögliche Einstellbarkeit verschiedener Gruppen untereinander kann die Stickoxidemission optimal gehalten und geregelt werden.
- Die Gruppeneinteilung und die verschiedenen Betriebsmodi erlauben ein flexibles Reagieren auf schnelle Lastschwankungen was den Betrieb der Gasturbine weiterhin stabilisiert.
- Es handelt sich um ein einfaches, sicheres Fahrkonzept
- Hohe Verfügbarkeit durch kontrolliertes Hoch- und Herunterfahren

### BEZEICHNUNGSLISTE

- 11: Zubringerleitung
- 12: Hauptabschaltventil
- 13: Filter
- 14: Sieb
- 15: Schnellabschaltventil
- 16,17: Entspannungsventile
- 18,19,20: Steuerventile erster, zweiter und dritter Brennstoffzufuhrring
- 21,22,23: erster, zweiter und dritter Brennstoffzufuhrring
- 24,25,26: Brennstoffzufuhrringauslässe
- 27: Brenner
- 28: Brennstoffzufuhrringauslass
- 29: Brennerventil
- 30: Brenner im Pilotmodus
- 31: Brenner im Vormischmodus
- 40: ¼ Vormischbrennergruppe
- 41: ¾ Vormischbrennergruppe
- 42: ¾ intern pilotierte Brennergruppe
- 44: Brennerringe
- 50,51,53: Fahrbereiche im Lastbetrieb, Brennstoffverteilung
- 52: Umschaltpunkt
- 60,61,62: Fahrbereiche im Lastbetrieb, Brennstoff/Luft Verhältnis

## Patentansprüche

1. Verfahren zum Betrieb einer Gasturbine,
- bei welchem ein gasförmiger Brennstoff über eine Mehrzahl von parallel arbeitenden, auf mindestens einem konzentrischen Ring angeordneten Brennern (27) in die Brennkammer eingedüst und dort verbrannt wird, und die dabei entstehenden heissen Verbrennungsgase durch die Gasturbine geleitet werden,
- die Brenner (27) in wenigstens zwei Gruppen (40-42) von Brennern (27) eingeteilt sind, und diese Gruppen (40-42) in Abhängigkeit vom Betriebzustand der Gasturbine einzeln angesteuert werden,
- wobei beim Hochfahren der Gasturbine vom unbelasteten Leerlaufbetrieb in einen Vollastbetrieb die wenigstens zwei Gruppen (40 - 42) in wenigstens zwei Phasen nacheinander gezündet und/oder zugeschaltet werden,
**dadurch gekennzeichnet, dass**
- wenigstens eine der Gruppen (41) die selben Brenner (27) wie eine andere Gruppe (42) umfasst, wobei sich die beiden Gruppen (41, 42) nur in der Betriebsart (30, 31) der Brenner (27) unterscheiden, und die Brenner (27) der beiden Gruppen (41, 42) in einem mittleren Lastbereich in zwei Betriebsarten (30, 31) betrieben werden.

2. Verfahren nach Anspruch 1,
**dadurch gekennzeichnet, dass**
die Brenner (27) der beiden Gruppen (41, 42) im mittleren Lastbereich in einem Vormischmodus (31) und in einem Pilotmodus (30) betrieben werden.

3. Verfahren nach Anspruch 1 oder 2,
**dadurch gekennzeichnet, dass**
- die Brenner (27) der beiden Gruppen (41, 42) in einem unteren Lastbereich (50, 60) nur in einem Pilotmodus (30) betrieben werden,
- die Brenner (27) der beiden Gruppen (41, 42) in einem mittleren Lastbereich (51, 61) sowohl in einem Pilotmodus (30) als auch in einem Vormischmodus (31) betrieben werden, und
- die Brenner (27) der beiden Gruppen (41, 42) in einem oberen Lastbereich (53, 62) nur im Vormischmodus (31) betrieben werden.

4. Verfahren nach Anspruch 3,
**dadurch gekennzeichnet, dass**
im oberen Lastbereich (53, 62) die Brenner (27) der beiden Gruppen (41, 42) mit einem fetten Brennstoffgemisch betrieben werden und durch mager im Vormischmodus (31) betriebene Brenner (27) einer weiteren Gruppe (40) extern pilotiert werden.

5. Verfahren nach einem der Ansprüche 1 bis 4,
**dadurch gekennzeichnet, dass**
Zündung und/oder Zuschaltung der Gruppen (40-42) in den verschiedenen Phasen in Abhängigkeit von der Drehzahl der Gasturbine und/oder von der an der Gasturbine anliegenden Last und/oder von den von der Gasturbine abgegebenen Emissionen erfolgt.

6. Verfahren nach einem der Anspruch 1 bis 5,
**dadurch gekennzeichnet, dass**
die Brennstoffversorgung der Brenner (27) der einzelnen Gruppen (40-42) in den verschiedenen Phasen in Abhängigkeit von der Drehzahl der Gasturbine und/oder von der an der Gasturbine anliegenden Last und/oder von den von der Gasturbine abgegebenen Emissionen erfolgt.

7. Verfahren nach einem der Anspruch 1 bis 6,
**dadurch gekennzeichnet, dass**
- die Brenner (27) einer ersten Gruppe (40), welche weniger als die Hälfte der Gesamtzahl der Brenner (27) umfasst, im Vormischmodus (31) betrieben werden,
- die Brenner (27) einer zweiten Gruppe (41), die durch die restlichen Brenner (27) der Brennkammer gebildet wird, im Vormischmodus (31) betrieben werden, und
- die Brenner (27) einer dritten Gruppe (42) im Pilotmodus (30) betrieben werden, wobei die dritte Gruppe (41) durch die Brenner (27) der zweiten Gruppe (41) gebildet wird.

8. Verfahren nach Anspruch 7,
**dadurch gekennzeichnet, dass**
die Brennkammer mit insgesamt 72 Brennern (27) betrieben wird, wobei die erste Gruppe (40) 18 Brennern (27) umfasst, und wobei die zweite und die dritte Gruppe (41, 42) 54 Brennern (27) umfassen.

9. Verfahren nach Anspruch 7 oder 8,
**dadurch gekennzeichnet, dass**
- in einer ersten Phase (50, 60) beim Hochfahren der Gasturbine vom unbelasteten Leerlaufbetrieb in einen unteren Lastbereich (50, 60) nur die dritte Gruppe (42) aktiv ist, und diese dritte Gruppe (42) bei zunehmender Last zunehmend mit Brennstoff versorgt wird,
- in einer zweiten Phase (51, 61) in einen mittleren Lastbereich (50, 60) bis zu einem Umschaltpunkt (52) alle drei Gruppen aktiv sind und dass in dieser zweiten Phase (51, 61) die dritte Gruppe (42) bei zunehmender Last abnehmend mit Brennstoff versorgt wird, während die erste und die zweite Gruppe (40, 41) zunehmend mit Brennstoff versorgt werden, wobei die erste Gruppe (40) dabei fetter gefahren wird als die zweite Gruppe (41) und
- dass in einer dritten Phase (53, 62) in einen oberen Lastbereich (50, 60) oberhalb des Umschaltpunkts (52) die dritte Gruppe (42) vollständig ausgeschaltet ist, die erste Gruppe (40) mager und die zweite Gruppe (41) fett gefahren wird, und dass in dieser dritten Phase (53, 62) bei zunehmender Last die erste Gruppe (40) fetter und die zweite Gruppe (41) magerer mit Brennstoff versorgt wird.

10. Verfahren nach Anspruch 9,
**dadurch gekennzeichnet, dass**
- die Gasturbine in der ersten Phase (50, 60) zwischen 0 und 20% relativer Last betrieben wird,
- die Gasturbine in der zweiten Phase (51, 61) zwischen vorzugsweise 20% relativer Last bis zu einem Umschaltpunkt bei 53.5% relativer Last betrieben wird, und
- die Gasturbine in der dritten Phase (53, 62) oberhalb des Umschaltpunkts (52) von 53.5% relativer Last betrieben wird.

## Claims

1. Method of operating a gas turbine
- in which a gaseous fuel is sprayed via a plurality of burners (27), working in parallel and arranged on at least one concentric ring, into the combustion chamber and is burned there, and the hot combustion gases produced in the process are directed through the gas turbine,
- the burners (27) are divided into at least two groups (40-42) of burners (27), and these groups (40-42) are activated individually as a function of the operating state of the gas turbine,
- the at least two groups (40-42), during the run-up of the gas turbine from the no-load idling operation to a full-load operation, being ignited and/or started up one after the other in at least two phases,
**characterized in that**
- at least one of the groups (41) comprises the same burners (27) as another group (42), the two groups (41, 42) differing only in the operating mode (30, 31) of the burners (27), and the burners (27) of the two groups (41, 42) being operated within a moderate load range in two operating modes (30, 31).

2. Method according to Claim 1, **characterized in that** the burners (27) of the two groups (41, 42) are operated within the moderate load range in a premix mode (31) and in a pilot. mode (30) .

3. Method according to Claim 1 or 2, **characterized in that**
- the burners (27) of the two groups (41, 42) are operated within a lower load range (51, 61) only in a pilot mode (30),
- the burners (27) of the two groups (41, 42) are operated within a moderate load range (51, 61) both in a pilot mode (30) and in a premix mode (31), and
- the burners (27) of the two groups (41, 42) are operated within a top load range (53, 62) only in the premix mode (31).

4. Method according to Claim 3, **characterized in that**, within the top load range (53, 62), the burners (27) of the two groups (41, 42) are operated with a rich fuel mixture and are externally piloted by burners (27) of a further group (40) which are operated on a lean mixture in the premix mode (31).

5. Method according to one of Claims 1 to 4, **characterized in that** the ignition and/or start-up of the groups (40-42) in the different phases is effected as a function of the speed of the gas turbine and/or of the load applied to the gas turbine and/or of the emissions given off by the gas turbine.

6. Method according to one of Claims 1 to 5, **characterized in that** the fuel supply to the burners (27) of the individual groups (40-42) in the different phases is effected as a function of the speed of the gas turbine and/or of the load applied to the gas turbine and/or of the emissions given off by the gas turbine.

7. Method according to one of Claims 1 to 6, **characterized in that**
- the burners (27) of a first group (40), which comprises less than half the total number of burners (27), are operated in the premix mode (31) ,
- the burners (27) of a second group (41), which is formed by the rest of the burners (27) of the combustion chamber, are operated in the premix mode (31), and
- the burners (27) of a third group (42) are operated in the pilot mode (30), the third group (41) being formed by the burners (27) of the second group (41).

8. Method according to Claim 7, **characterized in that** the combustion chamber is operated with a total of 72 burners (27), the first group (40) comprising 18 burners (27), and the second and the third group (41, 42) comprising 54 burners (27).

9. Method according to Claim 7 or 8, **characterized in that**
- in a first phase (50, 60), during the run-up of the gas turbine from the no-load idling operation to a lower load range (50, 60), only the third group (42) is active, and this third group (42) is increasingly supplied with fuel during increasing load,
- in a second phase (51, 61), within a moderate load range (50, 60) up to a changeover point (52), all three groups are active, and **in that**, in this second phase (51, 61), the third group (42) is supplied with fuel to a decreasing extent during increasing load, while the first and the second group (40, 41) are increasingly supplied with fuel, the first group (40) being run on a richer mixture than the second group (41) in the process, and
- **in that**, in a third phase (53, 62), within a top load range (50, 60) above the changeover point (52), the third group (42) is completely shut down, the first group (40) is run on a lean mixture and the second group (41) is run on a rich mixture, and **in that**, in this third phase (53, 62), the first group (40) is supplied with a richer fuel mixture and the second group (41) is supplied with a leaner fuel mixture during increasing load.

10. Method according to Claim 9, **characterized in that**
- the gas turbine is operated in the first phase (50, 60) between 0 and 20% relative load,
- the gas turbine is operated in the second phase (51, 61) between preferably 20% relative load up to a changeover point at 53.5% relative load, and
- the gas turbine is operated in the third phase (53, 62) above the changeover point (52) of 53.5% relative load.

## Revendications

1. Procédé pour faire fonctionner une turbine à gaz,
- dans lequel un combustible gazeux est injecté dans la chambre de combustion par le biais d'une pluralité de brûleurs (27) fonctionnant en parallèle, disposés sur au moins un anneau concentrique, et y est brûlé, et les gaz de combustion chauds s'y formant sont conduits à travers la turbine à gaz,
- les brûleurs (27) sont divisés en au moins deux groupes (40-42) de brûleurs (27) et ces groupes (40-42) sont démarrés individuellement en fonction de l'état de fonctionnement de la turbine à gaz,
- lors de l'accélération de la turbine à gaz du fonctionnement en marche à vide non chargé à un mode de pleine charge, les au moins deux groupes (40 - 42) étant allumés et/ou connectés l'un après l'autre en au moins deux phases,
**caractérisé en ce que**
- au moins l'un des groupes (41) comprend les mêmes brûleurs (27) qu'un autre groupe (42), les deux groupes (41, 42) ne se différenciant que par le type de f onctionnement (30, 31) des brûleurs (27), et les brûleurs (27) des deux groupes (41, 42) étant entraînés dans une plage de charge moyenne suivant deux modes de fonctionnement (30, 31).

2. Procédé selon la revendication 1,
**caractérisé en ce que**
les brûleurs (27) des deux groupes (41, 42) sont entraînés dans la plage de charge moyenne en un mode à prémélange (31) et en un mode pilote (30).

3. Procédé selon la revendication 1 ou 2,
**caractérisé en ce que**
- les brûleurs (27) des deux groupes (41, 42) sont entraînés dans une plage de charge inf érieure (50, 60) seulement en mode pilote (30) ,
- les brûleurs (27) des deux groupes (41, 42) sont entraînés dans une plage de charge moyenne (51, 61) à la fois en mode pilote (30) et en mode de prémélange (31), et
- les brûleurs (27) des deux groupes (41, 42) sont entraînés dans une plage de charge supérieure (53, 62) seulement en mode de prémélange (31).

4. Procédé selon la revendication 3,
**caractérisé en ce que**
dans la plage de charge supérieure (53, 62), les brûleurs (27) des deux groupes (41, 42) sont entraînés avec un mélange de combustible riche et sont pilotés en externe par des brûleurs (27) d'un autre groupe (40) entraînés avec un mélange pauvre en mode de prémélange (31).

5. Procédé selon l'une quelconque des revendications 1 à 4,
**caractérisé en ce que**
l'allumage et/ou la connexion des groupes (40-42) dans les différentes phases s'effectue en fonction de la vitesse de rotation de la turbine à gaz et/ou de la charge appliquée à la turbine à gaz et/ou des émissions produites par la turbine à gaz.

6. Procédé selon l'une quelconque des revendications 1 à 5, **caractérisé en ce que**
l'alimentation en combustible des brûleurs (27) des groupes individuels (40-42) s'effectue dans les différentes phases en fonction de la vitesse de rotation de la turbine à gaz et/ou de la charge appliquée à la turbine à gaz et/ou des émissions produites par la turbine à gaz.

7. Procédé selon l'une quelconque des revendications 1 à 6,
**caractérisé en ce que**
- les brûleurs (27) d'un premier groupe (40), qui comprend moins de la moitié de la totalité des brûleurs (27), sont entraînés dans le mode de prémélange (31),
- les brûleurs (27) d'un deuxième groupe (41), qui est formé par le restant des brûleurs (27) de la chambre de combustion; sont entraînés en mode de prémélange (31), et
- les brûleurs (27) d'un troisième groupe (42) sont entraînés en mode pilote (30), le troisième groupe (41) étant formé par les brûleurs (27) du deuxième groupe (41).

8. Procédé selon la revendication 7,
**caractérisé en ce que**
la chambre de combustion est entraînée avec au total 72 brûleurs (27), le premier groupe (40) comprenant 18 brûleurs (27), et le deuxième et le troisième groupe (41, 42) comprenant 54 brûleurs (27).

9. Procédé selon la revendication 7 ou 8,
**caractérisé en ce que**
- dans une première phase (50, 60) lors de l'accélération de la turbine à gaz du mode de fonctionnement en marche à vide sans charge dans une plage de charge inférieure (50, 60), seulement le troisième groupe (42) est actif, et ce troisième groupe (42) est alimenté de manière croissante en combustible avec une charge croissante,
- dans une deuxième phase (51, 61), dans une plage de charge moyenne (50, 60) jusqu'à un point de commutation (52), tous les trois groupes sont actifs et **en ce que** dans cette deuxième phase (51, 61), le troisième groupe (42), pour une charge croissante, est alimenté de manière décroissante en combustible, tandis que le premier et le deuxième groupe (40, 41) sont alimentés de manière croissante en combustible, le premier groupe (40) étant entraîné en l'occurrence avec un mélange plus riche que le deuxième groupe (41) et
- **en ce que** dans une troisième phase (53, 62) dans une plage de charge supérieure (50, 60) au-dessus du point de commutation (52), le troisième groupe (42) est complètement déconnecté, le premier groupe (40) est entraîné avec un mélange pauvre et le deuxième groupe (41) avec un mélange riche, et **en ce que** dans cette troisième phase (53, 62), pour une charge croissante, le premier groupe (40) est alimenté en combustible avec un mélange riche et le deuxième groupe (41) avec un mélange pauvre.

10. Procédé selon la revendication 9,
**caractérisé en ce que**
- la turbine à gaz est entraînée dans la première phase (50, 60) entre 0 et 20% de charge relative,
- la turbine à gaz est entraînée dans la deuxième phase (51, 61) entre de préférence 20% de charge relative et un point de commutation à 53,5% de charge relative, et
- la turbine à gaz est entraînée dans la troisième phase (53, 62) au-dessus du point de commutation (52) depuis 53,5% de charge relative.
